# EUROPEAN PATENT APPLICATION

(11) **EP 1 236 772 A1**
(43) Date of publication of application: **04.09.2002**
(21) Application number: 00961015.5
(22) Date of filing: 14.09.2000
(51) Int. Cl.: C08L 101/00, C08L 83/04, C09D 201/00, C09D 183/04, B05D 7/24

(54) **COMPOSITION, METHODS OF FORMING LOW-PERMITTIVITY FILM FROM THE COMPOSITION, LOW-PERMITTIVITY FILM, AND ELECTRONIC PART HAVING THE LOW-PERMITTIVITY FILM**

(30) Priority: 16.09.1999 JP 26139199
(71) Applicant: Hitachi Chemical Company, Ltd., Tokyo 163-0449 (JP)
(72) Inventor: NARITA, Takenori, Hitachi-shi, Ibaraki 317-0061 (JP); MORISIMA, Hiroyuki, Hitachi-shi, Ibaraki 319-1417 (JP); NOBE, Shigeru, Hitachi-shi, Ibaraki 316-0032 (JP); ENOMOTO, Kazuhiro, Hitachi-shi, Ibaraki 317-0061 (JP); SAKURAI, Haruaki, Hitachi-shi, Ibaraki 317-0061 (JP); TERADA, Nobuko, Hitachi-shi, Ibaraki 316-0006 (JP)
(74) Representative: Henkel, Feiler, Hänzel
(86) International application number: JP0006304
(87) International publication number: WO01019922

(57) **Abstract**

The present invention provides a composition comprising (a) a thermally decomposable polymer and (b) a siloxane oligomer evenly dissolved in (c) an organic solvent; a composition comprising (a) a thermally decomposable polymer, (b) a siloxane oligomer, and (c)' an organic solvent in which both of the ingredients (a) and (b) are soluble; a method for forming a low-permittivity film characterized by applying the composition to a substrate to form a composite film comprising the thermally decomposable polymer and the siloxane oligomer evenly compatibilized therewith and then heating the resulting film to condense the siloxane oligomer and remove the thermally decomposable polymer; a method for forming a low-permittivity film characterized by applying the composition to a substrate to form a composite film comprising the thermally decomposable polymer and the siloxane oligomer evenly compatibilized therewith, subsequently conducting a first heating step in which the siloxane oligomer is crosslinked while keeping the thermally decomposable polymer remaining in the film, and then conducting a second heating step in which the thermally decomposable polymer is removed; a low-permittivity film formed by either of the methods for low-permittivity film formation; and an electronic part having the low-permittivity film.

## Description

### Field of the Invention

The present invention relates to a composition, a method for forming a low-permittivity film using the composition, a low-permittivity film, and an electronic part having the low-permittivity film. More particularly, the present invention is concerned with a composition from which a low-permittivity film advantageously used as an interlayer insulating film for semiconductor device is formed, a method for forming a low-permittivity film using the composition, a low-permittivity film obtainable from the forming method, and an electronic part having the low-permittivity film, such as a semiconductor device or a multilayer printed circuit board.

### Background Art

In accordance with the fine patterning of the wiring for LSI having a high integration degree, a problem occurs in that an increase in wiring capacitance causes the signal-propagation delay time to increase.

Conventionally, an SiO₂ film having a specific permittivity of about 4.2 formed by a CVD process has been used as an interlayer insulating film, and, for reducing the wiring capacitance of a device and improving the operation speed of LSI, a development of a film having a lower permittivity is desired.

As low-permittivity films, an SiOF film (CVD process) having a specific permittivity of about 3.5, an organic SOG (spin on glass) having a specific permittivity of 2.5 to 3.0, and an organic polymer have currently been put into practical use. On the other hand, as materials having a specific permittivity of 2.5 or less which will be required in future, fluororesins and porous films have been proposed, and a material having satisfactory properties as an interlayer insulating film for use in LSI has not yet been developed as of today.

Fluororesins have a specific permittivity of about 2 and are therefore expected as a low-permittivity material. However, fluororesins have a Tg of 300°C or less, and hence, it is difficult to apply fluororesins as they are to interlayer insulating films for use in LSI. As a method for solving this problem, it has been proposed to use a composite film comprising a fluororesin and polysiloxane as disclosed in Japanese Provisional Patent Publication No. 143420/1997. According to this method, it is possible to obtain an insulating film having a specific permittivity of 2.5 or less, but a thermal decomposition starting temperature of the fluororesin is 400°C or less, so that there is a problem that there is no wide margin in the processing temperature even if the processing temperature for LSI will be lowered in future.

A porous film has attracted attention as a technique which can achieve a specific permittivity of 2.5 or less. As a method for forming a porous film, Japanese Patent Publication No. 12790/1994 has proposed a method in which an organopolysiloxane coating solution containing an organic polymer, such as polystyrene and polyethylene, is applied and subjected to heat treatment, and Japanese Provisional Patent Publication No. 25359/1998 has proposed a method in which polymer particles are dispersed in a polysiloxane precursor. However, in these methods, for forming a porous film, polymer particles are dispersed in a polysiloxane film, and then the polymer particles are removed from the film by heating. Therefore, it is difficult to control the size of the pores in the resulting porous film to 0.1 µm or less. It is expected that the wiring width in the future shrunk LSI is about 0.1 to 0.5 µm, and hence, a porous film having a pore size of 0.1 µm or more cannot be used as an interlayer insulating film.

For solving the above problem, Japanese Provisional Patent Publications Nos. 158012/1998 and 217458/1999 have proposed a method in which a porous film is formed from a composition in which both the organic polymer and the polysiloxane are dissolved in a solvent. However, in the method described in Japanese Provisional Patent Publication No. 158012/1998, there is needed a step for gelation using a basic catalyst at a low temperature after a solution of the organic polymer and polysiloxane is applied to a substrate. Therefore, the method poses problems in that the number of steps increases and controlling of the film quality is difficult. Further, in the method described in Japanese Provisional Patent Publication No. 217458/1999, as the organic polymer, a fluororesin having high heat resistance is used. Therefore, for completely decomposing the organic polymer, a heat treatment at a high temperature (about 450°C) for a long time is required.

When using an Al wiring which has conventionally been used as a wiring material, the treatment temperature of 450°C is permissible, but a heat treatment for a long time lowers the productivity. Recently, Cu is being used as a wiring material, but, when using a Cu wiring, the permissible treatment temperature is low (about 400°C) and this method is therefore difficult to apply to.

Thus, a method for forming a low-permittivity film, which has a specific permittivity of 2.5 or less and can be formed at about 400°C and applied to an interlayer insulating film for semiconductor device, such as LSI having finer wiring, and for multilayer printed circuit board, has not yet been found.

In the present invention, there is provided a composition from which a low-permittivity film having a specific permittivity of 2.5 or less can be obtained wherein the film can be formed by heating at about 400°C and applied to an interlayer insulating film for semiconductor device, such as LSI having finer wiring, and for multilayer printed circuit board.

In addition, in the present invention, there is provided a method for forming a low-permittivity film having a specific permittivity of 2.5 or less with ease in high yield wherein the film can be formed by heating at about 400°C and applied to an interlayer insulating film for semiconductor device, such as LSI having finer wiring, and for multilayer printed circuit board.

Further, in the present invention, there is provided a low-permittivity film having a specific permittivity of 2.5 or less, which film can be applied to an interlayer insulating film for semiconductor device, such as LSI having finer wiring, and for multilayer printed circuit board.

Further, in the present invention, there is provided an electronic part having the low-permittivity film and having such high quality and high reliability that it causes less signal-propagation delay, for example, a semi-conductor device, such as LSI having finer wiring, and a multilayer printed circuit board.

### SUMMARY OF THE INVENTION

The present invention is directed to a composition comprising (a) a thermally decomposable polymer and (b) a siloxane oligomer evenly dissolved in (c) an organic solvent.

The present invention is also directed to a composition comprising
(a) a thermally decomposable polymer,
(b) a siloxane oligomer, and
(c)' an organic solvent in which both of components (a) and (b) are soluble.

The present invention is also directed to the above-mentioned composition wherein (b) the siloxane oligomer is a compound having a non-hydrolyzable organic group.

The present invention is also directed to the above-mentioned composition wherein (b) the siloxane oligomer is a hydrolytic condensation product of an alkoxysilane represented by the following formula (I): 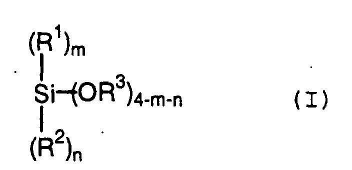 wherein R¹ and R² each represent a non-hydrolyzable group which may be the same or different; R³ represents an alkyl group having 1 to 6 carbon atoms; and each of m and n is an integer selected from 0 to 3 so that m and n satisfy the relationship: 0 ≦ m + n ≦ 3.

The present invention is also directed to the above-mentioned composition wherein (a) the thermally decomposable polymer is a polymer which exhibits a weight loss at 250°C of less than 5% based on the weight at 150°C, as measured by a thermogravimetric analysis in which the temperature is elevated from 30°C or lower at a temperature elevation rate of 20°C/min under an air stream.

The present invention is also directed to the above-mentioned composition wherein (a) the thermally decomposable polymer is a polymer which exhibits a weight loss at 400°C of 80% or more based on the weight at 150°C, as measured by a thermogravimetric analysis in which the temperature is elevated from 30°C or lower at a temperature elevation rate of 20°C/min under an air stream.

The present invention is also directed to the above-mentioned composition wherein (a) the thermally decomposable polymer is a fluorine-free polymer.

The present invention is also directed to the above-mentioned composition wherein (a) the thermally decomposable polymer is a methacrylic polymer or an acrylic polymer.

The present invention is also directed to a method for forming a low-permittivity film, comprising: applying any one of the above-mentioned compositions to a substrate to form a composite film which comprises the thermally decomposable polymer and the siloxane oligomer evenly compatibilized therewith; and then heating the resulting film to condense the siloxane oligomer and remove the thermally decomposable polymer.

The present invention is also directed to a method for forming a low-permittivity film, comprising: applying any one of the above-mentioned compositions to a substrate to form a composite film which comprises the thermally decomposable polymer and the siloxane oligomer evenly compatibilized therewith; subsequently conducting a first heating step in which the siloxane oligomer is crosslinked while keeping the thermally decomposable polymer remaining in the film; and then conducting a second heating step in which the thermally decomposable polymer is removed.

The present invention is also directed to the method for forming a low-permittivity film wherein the first heating step is conducted at a temperature of 80 to 350°C, and wherein the second heating step is conducted at a temperature of 350 to 500°C.

The present invention is also directed to a low-permittivity film formed by any one of the above-mentioned methods for forming a low-permittivity film.

The present invention is also directed to an electronic part having the above-mentioned low-permittivity film.

### BEST MODE FOR CARRYING OUT THE INVENTION

In the present invention, examples of (a) the thermally decomposable polymers include acrylic polymers, methacrylic polymers, polyester polymers, polyether polymers, vinyl polymers, polyimide polymers, vinylidene fluoride polymers, fluorine-containing vinyl polymers, and solvent-soluble perfluoropolymers. These are used individually or in combination.

The decomposition temperature of (a) the thermally decomposable polymer can be confirmed by using a thermogravimetric analysis. In the present invention, the decomposition temperature of (a) the thermally decomposable polymer was confirmed by performing a thermogravimetric analysis with the following apparatus and conditions.
Apparatus: TG-DTA6200 (manufactured by Seiko Instruments Inc.)
Temperature elevation starting temperature: 30°C or lower
Temperature elevation rate: 20°C/min
Sample weight: 10 mg
Atmosphere: Air at 200 ml/min

As the base weight for (a) the thermally decomposable polymer before starting decomposition, the weight of it at 150°C in the course of the temperature elevation is used. The weight loss at 150°C or lower is considered to be caused by removal of moisture adsorbed, i.e., factors other than the decomposition of (a) the thermally decomposable polymer.

Examples of (a) the thermally decomposable polymers which exhibit a weight loss at 250°C of 5 % or more include polyether polymers such as tetramethylene oxide and polyethylene glycol.

Examples of (a) the thermally decomposable polymers which exhibit a weight loss at 250°C of less than 5% include vinyl ester polymers such as polyvinyl acetate, methacrylate polymers such as polymethyl methacrylate, acrylate polymers such as polymethyl acrylate; polyvinyl alcohol, polyethylene imine and fluororesins.

Examples of (a) the thermally decomposable polymers which exhibit a weight loss at 250°C of less than 5 % and exhibit a weight loss at 400°C of 80% or more include methacrylate polymers such as polymethyl methacrylate, acrylate polymers such as polymethyl acrylate; and polyethylene imine.

Of these, methacrylate polymers and acrylate polymers such as polymethyl methacrylate and polymethyl acrylate exhibit a weight loss at 250°C of less than 2 % and exhibit a weight loss at 400°C of 90 % or more, and are therefore particularly excellent as (a) the thermally decomposable polymer to be used in the composition of the present invention.

A fluororesin has a heat resistance at about 400°C, and, removal of the polymer by heating at about 400°C requires a long time, and thus the fluororesin is disadvantageous from a practical point of view. Therefore, as (a) the thermally decomposable polymer, it is preferred to use a fluorine-free polymer.

In the present invention, as (b) the siloxane oligomer, for example, there may be mentioned a hydrolytic condensation product of an alkoxysilane represented by the following formula (I): 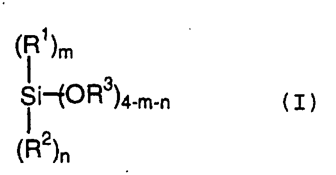 wherein R¹ and R² each represent a non-hydrolyzable group which may be the same or different; R³ represents an alkyl group having 1 to 6 carbon atoms; and each of m and n is an integer selected from 0 to 3 so that m and n satisfy the relationship: 0 ≦ m + n ≦ 3.
The hydrolytic condensation product may be either a condensation product partially hydrolyzed or a condensation product completely hydrolyzed.

As the non-hydrolyzable group, non-hydrolyzable groups having 1 to 4 carbon atoms are preferred from the viewpoint of availability with ease. Examples of non-hydrolyzable groups include organic groups having a reactive group such as a γ-glycidoxypropyl group, a γ-aminopropyl group, an aminophenyl group and an N-phenyl-γ-aminopropyl group, alkyl groups such as a methyl group, an ethyl group, a propyl group and a butyl group, alkenyl groups such as a vinyl group, aryl groups such as a phenyl group and a tolyl group, and fluorine-containing alkyl groups such as a trifluoromethyl group, a trifluoropropyl group, a pentafluorobutyl group, a nonafluorohexyl group, a tridecafluorooctyl group, a heptadecafluorodecyl group and a heptadecafluoroundecyl group. Among the above-mentioned non-hydrolyzable groups, alkyl groups and aryl groups are particularly preferred. Alkyl groups and aryl groups have high heat resistance and are hydrophobic, and therefore, by using these groups, a low-permittivity film having high heat resistance and low moisture absorption property can be obtained.

The hydrolytic condensation product in the present invention is a hydrolytic condensation product or a mixture of two or more hydrolytic condensation products selected from the group consisting of the hydrolytic condensation product wherein the relationship: m = n = 0 is satisfied in the formula (I), the hydrolytic condensation product wherein the relationship: m + n = 1 is satisfied, the hydrolytic condensation product wherein the relationship: m + n = 2 is satisfied, and the hydrolytic condensation product wherein the relationship: m + n = 3 is satisfied.

The alkoxysilane where m + n equals 3 has only one hydrolyzable group in the molecule thereof, as a matter of course, and it cannot solely form a hydrolytic condensation product. Therefore, the m + n = 3 alkoxysilane is used in combination with the alkoxysilane where m = n = 0, the alkoxysilane where m + n = 1, or the alkoxysilane where m + n = 2 for suppressing an excess reaction of a hydrolytic condensation product of the alkoxysilane in a solution. It is preferred that the alkoxysilane where m + n = 3 is present in an amount of 10 mol% or less based on the total mole of the alkoxysilane(s).

By adding an appropriate amount of the alkoxysilane where m = n = 0 having no non-hydrolyzable group, the resulting low-permittivity film can be improved in mechanical strength. However, when the amount of the alkoxysilane where m = n = 0 becomes large, the permittivity of the resulting film becomes high and the moisture absorption property is increased. Therefore, it is preferred that the added amount of the alkoxysilane where m = n = 0 is determined according to the balance between the mechanical strength, the permittivity, and the moisture absorption property of the film. The preferred amount of the alkoxysilane where m = n = 0 added is 0.1 to 0.7 mol based on 1 mol of the alkoxysilane having a non-hydrolyzable group.

Specific examples of these alkoxysilanes are shown below.

There may be mentioned tetraalkoxysilanes such as tetramethoxysilane, tetraethoxysilane and tetrapropoxysilane, monoalkyltrialkoxysilanes such as methyltrimethoxysilane and methyltriethoxysilane, monoaryltrialkoxysilanes such as phenyltrimethoxysilane and phenyltriethoxysilane, monoalkenyltrialkoxysilanes such as vinyltrimethoxysilane and vinyltriethoxysilane, fluorine-containing alkoxysilanes such as trifluoromethyltrimethoxysilane, trifluoropropyltrimethoxysilane, pentafluorobutyltrimethoxysilane, nonafluorohexyltrimethoxysilane, tridecafluorooctyltrimethoxysilane, heptadecafluorodecyltrimethoxysilane, heptadecafluorodecylmethyldimethoxysilane, heptadecafluoroundecyltrimethoxysilane, (4-perfluorobutylphenyl)trimethoxysilane, (4-perfluorohexylphenyl)trimethoxysilane and (4-perfluorooctylphenyl)trimethoxysilane, epoxysilanes such as γ-glycidoxypropyltrimethoxysilane and γ-glycidoxypropyltriethoxysilane, aliphatic aminosilanes such as γ-aminopropylmethyldiethoxysilane and γ-aminopropyltriethoxysilane, and aromatic ring-containing aminosilanes such as aminophenyltrimethoxysilane, aminophenyltriethoxysilane and N-phenyl-γ-aminopropyltrimethoxysilane. These alkoxysilanes are used individually or in combination.

The condensation reaction of the alkoxysilane can be conducted by a conventional manner. For example, there can be mentioned a method in which water is added to the alkoxysilane in the presence of a solvent and a catalyst to effect a hydrolytic condensation reaction.

In this case, if desired, heating may be conducted.
As a catalyst, an inorganic acid such as hydrochloric acid, nitric acid and sulfuric acid, and an organic acid such as formic acid, oxalic acid and acetic acid can be used. In general, it is preferred that the hydrolytic condensation product has a weight average molecular weight (as measured by gel permeation chromatography (GPC) using a calibration curve obtained by standard polystyrene) in the range of 500 to 10000 from the viewpoint of increasing compatibility of the hydrolytic condensation product with a thermally decomposable polymer and for facilitating dissolution of the hydrolytic condensation product in a solvent. Then, if desired, water present in the system is removed by distillation, and further the catalyst may be removed using an ion-exchange resin.

With respect to the method for preparing a mixed solution of (a) the thermally decomposable polymer and (b) the siloxane oligomer; there is no particular limitation as long as a uniform solution can be finally prepared, and, as examples of methods, there may be mentioned the following (1) to (3) methods.
(1) A method in which a solution of (a) the thermally decomposable polymer and a solution of (b) the siloxane oligomer are separately prepared preliminarily, and then they are mixed together. In this method, the solution of (b) the siloxane oligomer may be directly prepared by using a solvent which is compatible with the solution of (a) the thermally decomposable polymer, or (b) the siloxane oligomer may be synthesized in a solvent which is incompatible with the solution of (a) the thermally decomposable polymer, and then, the solvent is substituted with a solvent which is compatible with the same by a known solvent substitution method. The latter is used when the hydrolytic condensation reaction of an alkoxysilane does not proceed satisfactorily in a solvent which is compatible with the solution of (a) the thermally decomposable polymer or when the degree of polymerization of the condensation product is difficult to control.
(2) A method in which an alkoxysilane is dissolved in the preliminarily prepared solution of (a) the thermally decomposable polymer to effect a hydrolytic condensation reaction in the resulting solution.
(3) A method in which a solution of (b) the siloxane oligomer is first prepared, and then (a) the thermally decomposable polymer is added thereto to be dissolved therein.

A ratio of an amount of (b) the siloxane oligomer used to the amount of (a) the thermally decomposable polymer used can be arbitrarily adjusted depending on the purpose, and, generally, (b) the siloxane oligomer is preferably incorporated in an amount of 10 to 1000 parts by weight, more preferably 60 to 450 parts by weight based on 100 parts by weight of (a) the thermally decomposable polymer. The weight of (b) the siloxane oligomer is obtained by making calculation on the assumption that all the hydrolyzable groups are condensed to form Si-O-Si linkages.

When the amount of (b) the siloxane oligomer is too small, the mechanical strength of the resulting low-permittivity film tends to be lowered, and, when the amount thereof is too large, the specific permittivity of the resulting film tends to increase.
(a) the thermally decomposable polymer may have a functional group, but it is not preferred that a crosslinking reaction of the functional group with the hydrolyzable group in (b) the siloxane oligomer and a silanol group formed by the hydrolysis occurs. When crosslinking occurs between (a) the thermally decomposable polymer and (b) the siloxane oligomer, after removing (a) the thermally decomposable polymer by heating, a silanol group is formed to deteriorate the low permittivity and low moisture absorption property of the resulting film.

When a crosslinking reaction does not occur between the functional group of (a) the thermally decomposable polymer and the hydrolyzable group in (b) the siloxane oligomer and the silanol group formed by the hydrolysis but only an interaction occurs therebetween due to polarity of the functional group, the compatibility of (a) the thermally decomposable polymer with (b) the siloxane oligomer is improved, so that a more uniform low-permittivity film can be obtained.

In the present invention, examples of (c) the organic solvents include alcohol solvents such as methanol, ethanol propanol and butanol, fluorine-containing alcohol solvents such as CF₃CH₂OH, CF₃CF₂CH₂OH and CF₃(CF₂)₃CH₂CH₂OH, acetate solvents such as methyl acetate, ethyl acetate, propyl acetate and butyl acetate, lactone solvents such as γ-lactone, glycol acetate solvents such as ethylene glycol monomethyl acetate and ethylene glycol diacetate, amide solvents such as N-methyl-2-pyrrolidone, and glycol ether solvents. These are used individually or in combination.

Among these (c) organic solvents, it is preferred to use (c)' an organic solvent in which both of (a) the thermally decomposable polymer and (b) the siloxane oligomer are soluble.

The amount of (c) the organic solvent to be used is appropriately selected depending on the desired solution viscosity or thickness of the coating film, but, for example, when a coating film having a thickness of 0.1 to 5 µm is to be obtained by a spin coating method, it is preferred to use the organic solvent in an amount such that the solid content of the resulting composition becomes 1 to 20% by weight.

The formation of a low-permittivity film using the composition of the present invention can be achieved by, for example, applying the composition to a substrate to form a composite film which comprises (a) the thermally decomposable polymer and (b) the siloxane oligomer evenly compatibilized therewith, and then heating the resulting film to condense (b) the siloxane oligomer and remove (a) the thermally decomposable polymer.

In this method, in the heating step after application, it is important that (b) the siloxane oligomer is condensed in a state such that (a) the thermally decomposable polymer is present in the film to form a network of polysiloxane. When the decomposition of (a) the thermally decomposable polymer starts before forming the network of polysiloxane, the film suffers shrinkage due to the decomposition of thermally decomposable polymer (a), so that the low permittivity of the resulting film may possibly be deteriorated.

For obtaining a low-permittivity film having high heat resistance and low moisture absorption property, it is preferred to use a siloxane oligomer having a non-hydrolyzable group as (b) the siloxane oligomer. When such (b) a siloxane oligomer is heated without using a basic catalyst, condensation starts at 150°C or higher. Then, the condensation proceeds to form a network of polysiloxane, and the formation of the structure of the film is substantially completed at 250°C or higher. Therefore, in the present invention, for obtaining a low-permittivity film having high heat resistance and low moisture absorption property, (a) the thermally decomposable polymer preferably has a decomposition starting temperature of 150°C or higher, more preferably 250°C or higher. From such a point of view, it is preferred that (a) the thermally decomposable polymer is a polymer which exhibits a weight loss at 250°C of less than 5 %, and further which exhibits a weight loss at 400°C of 80 % or more, each based on the weight at 150°C, as measured by a thermogravimetric analysis in which the temperature is elevated from 30°C or lower at a temperature elevation rate of 20°C/min under an air stream.

Further, for obtaining a low-permittivity film by the method of the present invention, it is preferred that (a) the thermally decomposable polymer is satisfactorily removed by heating. When the removal of (a) the thermally decomposable polymer is incomplete, the low permittivity of the resulting film is tend to be impaired.

When the present invention is applied to formation of an interlayer insulating film for LSI, the heating temperature employed varies depending on the type of the wiring material. The heating temperature when using a conventional Al wiring is 400 to 450°C, and it is expected that the heating temperature when using a Cu wiring in future will be expected to be about 380 to 430°C. Therefore, when the present invention is applied to an LSI using a Cu wiring, it is preferred that (a) the thermally decomposable polymer is satisfactorily removed'at 400°C or less. Further, also in an LSI using an Al wiring, it is preferred that (a) the thermally decomposable polymer is removed at 400°C or less from the viewpoint of reducing the change in permittivity with the heating temperature.

Examples of coating methods for the composition of the present invention include a spin coating method, a dipping method, a potting method, a die coating method and a spray coating method, and the coating method may be appropriately selected depending on the form of the object to be coated and the film thickness needed. When the composition of the present invention is applied to an interlayer insulating film for semiconductor device, a spin coating method is preferred from the viewpoint of obtaining a narrow film thickness distribution. When the composition is applied to an interlayer insulating film for multilayer printed circuit board, a die coating method as well as a spin coating are preferred as high yield methods.

In the formation of a coating film, for volatilizing (c) the organic solvent and for condensing (b) the siloxane oligomer in a state such that (a) the thermally decomposable polymer is present in the film, it is preferred that the film is baked after application. The conditions for baking may be appropriately selected depending on the thickness of the coating film, but, from the viewpoint of facilitating drying the solvent, it is preferred that the baking is performed at 80 to 200°C, and, from the viewpoint of facilitating the condensation reaction of (b) the siloxane oligomer, it is preferred that the baking is performed at 200 to 350°C. Further, it is preferred to use a hot plate in the baking.

For advancing the condensation of (b) the siloxane oligomer satisfactorily so that no unreacted alkoxy group or silanol group remains in the film and for satisfactorily removing (a) the thermally decomposable polymer, it is preferred that the final curing is conducted at 350 to 500°C. The unreacted alkoxy group or silanol group *per se* causes the specific permittivity of the coating film to increase, and further can be a moisture-absorbing portion to cause the specific permittivity to increase due to the water absorbed. Therefore, it is desired that such groups do not remain in the coating film. It is preferred that the final curing is conducted using a hot plate or a furnace.

By applying the low-permittivity film formed from the composition of the present invention to an interlayer insulating film for semiconductor device and multilayer printed circuit board, it is possible to achieve excellent electrical properties such as low permittivity and high dielectric strength, and an improvement of performance such as reduction of the signal-propagation delay time.
Further, the present invention can be applied also when the process temperature is lowered by using a Cu wiring in a semiconductor device.

The semiconductor device mentioned in the present invention means discrete semiconductor devices such as a diode, a transistor, a compound semiconductor, a thermistor, a varistor and a thyristor, memory devices such as DRAM (dynamic random access memory), SRAM (static random access memory), EPROM (erasable programmable read-only memory), masked ROM (masked read-only memory), EEPROM (electrically erasable programmable read-only memory) and flash memory, theoretical circuit devices, such as a microprocessor, DSP (a digital signal processor) and ASIC (an application specific integrated circuit), integrated circuit devices of compound semiconductors such as MMIC (monolithic microwave integrated circuit), hybrid integrated circuits (hybrid IC), and photoelectric conversion devices such as a light emitting diode and a charge coupled device.

The multilayer printed circuit board in the present invention includes a high-density circuit board such as MCM (a multi chip module). By using the coating film formed from the composition of the present invention as an interlayer insulating film as mentioned above, not only the improvement of a device in performance such as reduction of the signal-propagation delay time, but also the improvement in reliability can be achieved.

### Examples

In the following, the present invention will be described with reference to the Examples.

### Preparation example 1

### (Siloxane oligomer solution ① obtained by hydrolytic condensation reaction using tetramethoxysilane in an amount of 0.4 mpl based on 1 mol of monomethyltrimethoxysilane; solvent: γ-butyrolactone)

Monomethyltrimethoxysilane, tetramethoxysilane and γ-butyrolactone as a solvent were mixed with each other in a flask, and acetic acid diluted with water was added dropwise to the resulting mixture while stirring to effect a reaction. In this instance, the temperature in the laboratory was 23°C, and the temperature in the flask was not controlled. The amount of the water added was equimolar to the alkoxy group in the alkoxysilane used, and the amount of the acetic acid added was made 0.01 mol based on 1.0 mol of the alkoxysilane. The concentration of the coating solution was adjusted so that the nonvolatile content became 20% by weight, thus obtaining Solution ①. The calculation for the nonvolatile content is made using the weight obtained by calculation on the assumption that all the hydrolyzable groups in the siloxane oligomer are condensed to form Si-O-Si linkages, and the same calculation method is employed in the following examples. After completion of the dropwise addition of water and the catalyst, the resulting mixture was stirred for about two hours, and then transferred to a closed container and allowed to stand at 23°C for two days. With respect to the resulting siloxane oligomer, a molecular weight was measured by GPC. As a result, it was found that the weight average molecular weight in terms of polystyrene was about 1500. Then, the solution was stored in a freezer (at -18 °C).

### Preparation example 2

### (Siloxane oligomer solution ② obtained by hydrolytic condensation reaction using tetramethoxysilane in an amount of 0.4 mol based on 1 mol of monomethyltrimethoxysilane; solvent: propylene glycol monopropyl ether)

Siloxane oligomer solution ② was prepared in substantially the same manner using propylene glycol monopropyl ether as a solvent. With respect to the resulting siloxane oligomer, a molecular weight was measured by GPC. As a result, it was found that the weight average molecular weight in terms of polystyrene was about 1500. After synthesis, the solution was stored in a freezer (at -18°C).

### Preparation example 3

Polymethyl methacrylate (PMMA) having a weight average molecular weight in terms of polystyrene of 120,000 was dissolved in γ-butyrolactone to obtain Solution ③ having a polymer concentration of 10% by weight.

### Preparation example 4

Polyvinyl acetate (PVAc) having a weight average molecular weight in terms of polystyrene of 12,800 was dissolved in propylene glycol monopropyl ether to obtain Solution ④ having a polymer concentration of 10% by weight.

### Example 1

In a flask were mixed 100 g of Siloxane oligomer solution ① and 133 g of Polymer solution ③ together and the mixture was stirred for one hour. Then, the resulting mixture was allowed to stand at room temperature for one day to obtain Solution A. The obtained composition has a nonvolatile content of about 14% by weight, and the weight ratio of the siloxane oligomer to the polymer is 150 parts by weight of the siloxane oligomer based on 100 parts by weight of the polymer.

### Example 2

In a flask were mixed 100 g of Siloxane oligomer solution ① and 50 g of Polymer solution ③ together and the mixture was stirred for one hour. Then, the resulting mixture was allowed to stand at room temperature for one day to obtain Solution B. The obtained composition has a nonvolatile content of about 17% by weight. The weight ratio of the siloxane oligomer to the polymer is 400 parts by weight of the siloxane oligomer based on 100 parts by weight of the polymer.

### Example 3

In a flask were mixed 100 g of Siloxane oligomer solution ② and 133 g of Polymer solution ④ together and the mixture was stirred for one hour. Then, the resulting mixture was allowed to stand at room temperature for one day to obtain Solution C. The obtained composition has a nonvolatile content of about 14% by weight, and the weight ratio of the siloxane oligomer to the polymer is 150 parts by weight of the siloxane oligomer based on 100 parts by weight of the polymer.

### Example 4

In a flask were mixed 100 g of Siloxane oligomer solution ② and 50 g of Polymer solution ④ together and the mixture was stirred for one hour. Then, the resulting mixture was allowed to stand at room temperature for one day to obtain Solution D. The obtained composition has a nonvolatile content of about 17% by weight. The weight ratio of the siloxane oligomer to the polymer is 400 parts by weight of the siloxane oligomer based on 100 parts by weight of the polymer.

### Comparative examples 1 and 2, and Examples 5 to 8

Using Siloxane oligomer solution ①, Siloxane oligomer solution ②, Coating solution A, Coating solution B, Coating solution C, and Coating solution D, coating films were formed by a spin coating method. As a substrate, a bare silicon wafer was used. The rotary speed for coating was adjusted per coating solution so that the thickness of the film after final curing (at 400 to 450°C) became about 4500 to 5000 Å. After completion of the spin coating, the resulting film was baked by a hot plate at 150°C/30 sec and at 250°C/30 sec successively. The final curing was conducted by using a vertical furnace in a nitrogen gas atmosphere at 400, 425 and 450°C/1 hr.

With respect to each of the obtained films, a specific permittivity was measured. The specific permittivity was determined by a method in which an Al electrode having a diameter of 2 mm was formed on a film, and a capacitance of the capacitor formed by the Al electrode and the silicon wafer was measured to calculate a specific permittivity from the thickness of the film and the area of the Al electrode. The measurement of capacitance was conducted using an impedance analyzer at 10 kHz. The thickness of a film was measured by using ellipsometry. The results of the measurement of specific permittivity are shown in Table 1.

**Table 1**

| | Used solution | Specific permittivity | | |
|---|---|---|---|---|
| | | 400°C | 425°C | 450°C |
| Comparative example 1 | Solution ① | 3.1 | 3.0 | 2.9 |
| Comparative example 2 | Solution ② | 3.1 | 3.0 | 2.9 |
| Example 5 | Solution A | 2.2 | 2.1 | 2.1 |
| Example 6 | Solution B | 2.6 | 2.5 | 2.5 |
| Example 7 | Solution C | 2.7 | 2.5 | 2.3 |
| Example 8 | Solution D | 3.0 | 2.7 | 2.6 |

With respect to each of PMMA and PVAc used in Polymer solutions ③ and ④, a thermogravimetric analysis was conducted. The conditions for the measurement are shown below.
Apparatus: TG-DTA6200 (manufactured by Seiko Instruments Inc.)
Temperature elevation starting temperature: 30°C or lower
Temperature elevation rate: 20°C/min
Sample weight: 10 mg
Atmosphere: Air at 200 ml/min

For avoiding the influence of the weight loss caused by the factors other than the decomposition of the polymer, a weight loss at 250°C and a weight loss at 400°C, each based on the weight of the polymer at 150°C, were calculated from the results of measurement. The results are shown in Table 2.

**Table 2**

| Polymer | Weight loss rate | |
|---|---|---|
| | 250°C | 400°C |
| PMMA | 0% | 93% |
| PVAc | 0% | 71% |

It was obtained a result that the relative permittivities of the films prepared using Coating solutions A, B, C and D in Examples 5 to 8 are lower than those of the films prepared at the same temperature using Solutions ① and ② in Comparative examples 1 and 2. In addition, it was found that the larger the amount ratio of the polymer to the siloxane oligomer is, the lower the specific permittivity of the film becomes.

It was obtained a result that, when comparison is made between the case where PMMA was used as a thermally decomposable polymer (Examples 5 and 6) and the case where PVAc was used (Examples 7 and 8), the change in specific permittivity with the final curing temperature in the case where PMMA was used is smaller. Further, as can be seen from the results of the thermogravimetric analysis shown in Table 2, the weight loss at 400°C in the case where PMMA was used is larger. Therefore, it is presumed that PMMA is removed at a low temperature as compared to PVAc, and thus, the change in specific permittivity with the curing temperature when PMMA was used is smaller.

For confirming the influence of moisture absorption on each of the films formed in Examples 5 to 8, a wafer having formed thereon the film was allowed to stand for one week in a room controlled at a temperature of 23°C at a humidity of 40%, and then a specific permittivity was measured again. As a result, it was found that the increase in permittivity was 0.1 at maximum. This result indicates that each of the obtained films has a low moisture absorption property.

With respect to each of the films formed in Examples 5 to 8, a cross-section was observed through an electron microscope at a magnification of 100,000 times. As a result, it was found that definite pores seen in a film called porous film are not observed in each film. There is no means effective for observing micro-pores currently, but it is presumed that, when pores are assumed to be formed in each film, the pores have a size of 0.01 µm or less. Therefore, the obtained films can be applied to shrunk LSI having a wiring width as small as about 0.1 µm.

In Examples 5 to 8, there are shown examples in which the siloxane oligomer solution and the thermally decomposable polymer solution were separately prepared, and then mixed together to prepare a coating solution. When an alkoxysilane was subjected to hydrolytic condensation in a solution having dissolved therein a thermally decomposable polymer to prepare a coating solution, the same results were obtained.

### Industrial applicability

From the composition of the present invention, a low-permittivity film having a specific permittivity of 2.5 or less can be obtained wherein the film can be formed by heating at about 400°C and applied to an interlayer insulating film for semiconductor device, such as LSI having finer wiring, and for multilayer printed circuit board.

By the method for forming a low-permittivity film of the present invention, a low-permittivity film having a specific permittivity of 2.5 or less can be obtained with ease in high yield wherein the film can be formed by heating at about 400°C and applied to an interlayer insulating film for semiconductor device, such as LSI having finer wiring, and for multilayer printed circuit board.

The low-permittivity film of the present invention has a specific permittivity of 2.5 or less, and can be applied to an interlayer insulating film for semiconductor device, such as LSI having finer wiring and for multilayer printed circuit board.

The electronic part of the present invention has the low-permittivity film and has such high quality and high reliability that it causes less signal-propagation delay.

## Claims

1. A composition comprising (a) a thermally decomposable polymer and (b) a siloxane oligomer dissolved in (c) an organic solvent.

2. The composition according to Claim 1, wherein (b) the siloxane oligomer is a compound having a non-hydrolyzable organic group.

3. The composition according to Claim 2, wherein (b) the siloxane oligomer is a hydrolytic condensation product of an alkoxysilane represented by the following formula (I): 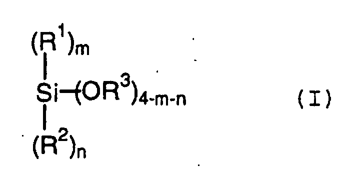 wherein R¹ and R² each represent a non-hydrolyzable group which may be the same or different; R³ represents an alkyl group having 1 to 6 carbon atoms; and each of m and n is an integer selected from 0 to 3 so that m and n satisfy the relationship: 0 ≦ m + n ≦ 3.

4. The composition according to Claim 3, wherein (a) the thermally decomposable polymer is a polymer which exhibits a weight loss at 250°C of less than 5% based on the weight at 150°C as measured by a thermogravimetric analysis in which the temperature is elevated from 30°C or lower at a temperature elevation rate of 20°C/min under an air stream.

5. The composition according to claim 4, wherein (a) the thermally decomposable polymer is a polymer which exhibits a weight loss at 400°C of 80% or more based on the weight at 150°C as measured by a thermogravimetric analysis in which the temperature is elevated from 30°C or lower at a temperature elevation rate of 20°C/min under an air stream.

6. The composition according to Claim 5, wherein (a) the thermally decomposable polymer is a fluorine-free polymer.

7. The composition according to claim 5, wherein (a) the thermally decomposable polymer is a methacrylate polymer or an acrylate polymer.

8. A composition comprising
(a) a thermally decomposable polymer,
(b) a siloxane oligomer, and
(c)' an organic solvent in which both of said components (a) and (b) are soluble.

9. The composition according to Claim 8, wherein (b) the siloxane oligomer is a compound having a non-hydrolyzable organic group.

10. The composition according to Claim 9, wherein (b) the siloxane oligomer is a hydrolytic condensation product of an alkoxysilane represented by the following formula (I): 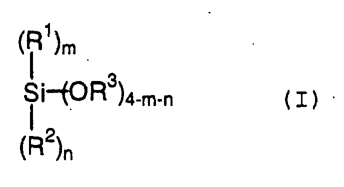 wherein R¹ and R² each represent a non-hydrolyzable group which may be the same or different; R³ represents an alkyl group having 1 to 6 carbon atoms; and each of m and n is an integer selected from 0 to 3 so that m and n satisfy the relationship: 0 ≦ m + n ≦ 3.

11. The composition according to Claim 10, wherein (a) the thermally decomposable polymer is a polymer which exhibits a weight loss at 250°C of less than 5% based on the weight at 150°C, as measured by a thermogravimetric analysis in which the temperature is elevated from 30°C or lower at a temperature elevation rate of 20°C/min under an air stream.

12. The composition according to Claim 11, wherein (a) the thermally decomposable polymer is a polymer which exhibits a weight loss at 400°C of 80% or more based on the weight at 150°C, as measured by a thermogravimetric analysis in which the temperature is elevated from 30°C or lower at a temperature elevation rate of 20°C/min under an air stream.

13. The composition according to Claim 12, wherein (a) the thermally decomposable polymer is a fluorine-free polymer.

14. The composition according to Claim 12, wherein (a) the thermally decomposable polymer is a methacrylate polymer or an acrylate polymer.

15. A method for forming a low-permittivity film which comprises applying the composition according to any one of Claims 1 to 14 to a substrate to form a composite film comprising the thermally decomposable polymer and the siloxane oligomer evenly compatibilized therewith, and then heating the resulting film to condense the siloxane oligomer and remove the thermally decomposable polymer.

16. A method for forming a low-permittivity film which comprises applying the composition according to any one of Claims 1 to 14 to a substrate to form a composite film comprising the thermally decomposable polymer and the siloxane oligomer evenly compatibilized therewith, subsequently conducting a first heating step in which the siloxane oligomer is crosslinked while keeping the thermally decomposable polymer remaining in the film, and then conducting a second heating step in which the thermally decomposable polymer is removed.

17. The method according to Claim 16, wherein said first heating step is conducted at a temperature of 80 to 350°C, and wherein said second heating step is conducted at a temperature of 350 to 500°C.

18. A low-permittivity film formed by the method according to Claim 15.

19. A low-permittivity film formed by the method according to Claim 16.

20. A low-permittivity film formed by the method according to Claim 17.

21. An electronic part having the low-permittivity film according to Claim 18.

22. An electronic part having the low-permittivity film according to Claim 19.

23. An electronic part having the low-permittivity film according to Claim 20.
